# EUROPÄISCHE PATENTANMELDUNG

(11) **EP 3 375 698 A1**
(43) Veröffentlichungstag der Anmeldung: **19.09.2018**
(21) Anmeldenummer: 17160803.7
(22) Anmeldetag: 14.03.2017
(51) Int. Cl.: B62D 53/00, B62B 3/00

(54) **TRANSPORTWAGEN ZUR AUFNAHME UND ZUM TRANSPORT VON MÜLLBEHÄLTERN**

(71) Anmelder: Schwäbische Werkzeugmaschinen GmbH, 78713 Schramberg-Waldmössingen (DE)
(72) Erfinder: Mauch, Ludwig, 78662 Bösingen (DE)
(74) Vertreter: Kohler Schmid Möbus Patentanwälte

(57) **Zusammenfassung**

Die Erfindung betrifft einen fahrbaren Transportwagen (1) zur Aufnahme und zum Transport mindestens eines Behälters (5), insbesondere eines Müllbehälters, mit einer rechtwinklig zur Fahrtrichtung des Transportwagens (1) offenen Behälteraufnahme (9) zur Aufnahme des mindestens einen Behälters (5), mit einer drehbar gelagerten, horizontalen Welle (10), die sich im Wesentlichen in Fahrtrichtung erstreckt und mindestens einen abstehenden Aufnahmearm (12-17) zum Einhängen eines Behälters (5) aufweist, und mit einem manuellen oder motorbetriebenen Drehantrieb (11) zum Verdrehen der Welle (11), um den mindestens einen Aufnahmearm (12-17) zwischen einer unteren Endposition, in der ein in der Behälteraufnahme (9) befindlicher Behälter (5) mit einem Einhängeabschnitt (22) oberhalb des freien Endes des Aufnahmearms (12-17) positionierbar oder in Eingriff mit dem freien Ende des Aufnahmearms (12-17) bringbar ist, und einer oberen Endposition, in der der Behälter (5) am Einhängeabschnitt (22) eingehängt und vom Boden abgehoben ist, zu bewegen.

## Beschreibung

Die vorliegende Erfindung bezieht sich auf einen Transportwagen zur Aufnahme und zum Transport eines oder mehrerer Behälter, insbesondere Müllbehälter.

Aus dem Stand der Technik sind Transportwagen zur Aufnahme von Müllbehältern bekannt, bei welchen die Müllbehälter auf eine Ladefläche aufgeladen und fixiert werden. Am Zielort müssen die Müllbehälter aus ihrer Fixierung gelöst und von der Ladefläche entladen werden.

Diese Arbeitsabläufe sind körperlich sehr belastend erfordern einen großen Zeitaufwand. Es besteht daher ein Bedarf an Transportwagen für Behälter, insbesondere Müllbehälter, die eine einen effizienten Transport ermöglichen.

Erfindungsgemäß wird ein Transportwagen mit den Merkmalen von Anspruch 1 bereitgestellt. Durch Drehen der Welle kann das freie Ende des mindestens einen Aufnahmearms (Hebelarm) zwischen einer unteren Endposition und einer oberen Endposition bewegt werden. In der unteren Endposition kann der Behälter mit einem Einhängeabschnitt oberhalb des freien Endes des Aufnahmearms positioniert werden, so dass durch Drehen der Welle der Aufnahmearm zunächst in den Einhängeabschnitt eingreift und dann der Behälter angehoben wird, bis er in der oberen Endposition vom Boden abgehoben ist. Die drehbare Welle kann sich horizontal oder im Wesentlichen horizontal erstrecken. Der Drehantrieb kann als manueller und/oder maschineller Antrieb konfiguriert sein. Die Müllbehälter können so konfiguriert sein, wie dies in der DIN EN 840-1, Ausgabe 2013-03, für zweirädrige Müllbehälter festgelegt ist.

Vorzugsweise weist die Welle mehrere radial abstehende Aufnahmearme zum Einhängen mehrerer (z.B. drei oder mehr) Behälter auf, so dass durch Drehen der Welle gleichzeitig mehrere Behälter vom Boden abgehoben werden können.

Der Transportwagen weist bevorzugt zwei Stützausleger auf, welche, gesehen entlang einer Längsachse der Welle, relativ zueinander versetzt angeordnet sind und welche jeweils einen freien Endabschnitt aufweisen, über welchen sich der Transportwagen am Boden abstützt, wobei relativ zu einer Vertikalebene, in welcher sich die Längsachse der Welle befindet, die freien Endabschnitte sich auf einer gemeinsamen Seite nach außen erstrecken, und wobei der mindestens eine Aufnahmearm, gesehen entlang der Längsachse der Welle, zwischen den Stützauslegern angeordnet ist.

Einer oder beide Stützausleger können sich senkrecht oder im Wesentlichen senkrecht zur Längsachse der Welle erstrecken. Die gemeinsame Seite, auf welcher sich die Endabschnitte der Stützausleger nach außen erstrecken, kann eine Beladungsseite für den fahrbaren Transportwagen sein.

Gemäß einer Ausführungsform ist der Aufnahmearm als Kammaufnahme ausgebildet. Die Kammaufnahme kann so konfiguriert sein, dass sie in eine Kammleiste des Behälters eingreifen kann, um durch eine Drehbewegung der Welle den Behälter aufzunehmen. Die Kammleiste kann durch die DIN EN 840-1, Ausgabe 2013-03, definiert sein. Die Kammleiste kann durch einen Bereich eines umgelegten Randes einer Einfüllöffnung des aufzunehmenden Behälters bereitgestellt sein.

Gemäß einer weiteren Ausführungsform weist der Transportwagen eine Zarge auf. Die Zarge kann auf einer Höhe angeordnet sein, welche geringer ist als eine Höhe der Welle. Die Höhe der Zarge kann gleich oder geringer sein, als die Hälfte der Höhe der Welle. Die Zarge kann horizontal oder im Wesentlichen horizontal angeordnet sein. Zumindest ein Abschnitt der Zarge kann sich parallel oder im Wesentlichen parallel zur Welle erstrecken. Der Abschnitt kann in Schwerkraftrichtung oder im Wesentlichen in Schwerkraftrichtung der Welle angeordnet sein. Zumindest ein Teil der Zarge kann als Rohr ausgebildet sein. Das Rohr kann einen quadratischen oder kreisförmigen Querschnitt aufweisen. Die Zarge kann offen sein. Insbesondere kann die Zarge auf derjenigen Seite offen sein, auf welche sich die freien Endabschnitte der Stützausleger hin erstrecken. Einer oder mehrere Abschnitte der Zarge können Teil eines oder beider Stützausleger sein.

Gemäß einer weiteren Ausführungsform weist der Transportwagen eine Dreharretierung auf. Die Dreharretierung kann zur Arretierung der Welle in zumindest einer Drehrichtung ausgebildet sein. Gemäß einer weiteren Ausführungsform weist der Transportwagen einen Rasthebel auf. Der Rasthebel kann die Dreharretierung bereitstellen.

Gemäß einer weiteren Ausführungsform stützt sich jeder der freien Endabschnitte der Stützausleger über zumindest ein Rollmittel auf dem Boden ab. Ein Rollmittel kann beispielsweise eine Rolle oder ein Rad sein. Das Rollmittel kann in Kontakt mit dem Boden sein.

Gemäß einer weiteren Ausführungsform ist der Transportwagen als Anhänger konfiguriert. Eine Zugrichtung des Anhängers kann parallel oder im Wesentlichen parallel zur Längsachse der Welle verlaufen. Der Anhänger kann als Anhänger eines Routenzuges konfiguriert sein.

Gemäß einer weiteren Ausführungsform weist der Transportwagen eine Zugvorrichtung auf. Die Zugvorrichtung kann eine Zugdeichsel und/oder eine Anhängerkupplung aufweisen. Die Zugdeichsel kann an einem der Stützausleger angelenkt sein. Die Anhängerkupplung kann an einem der Stützausleger befestigt sein. Die Zugdeichsel kann einen wahlweise abnehmbaren Handgriff aufweisen. Der wahlweise abnehmbare Handgriff kann ein Handgriff-Adapter sein. Bei abgenommenem Handgriff kann die Zugdeichsel für den Einsatz in einem Routenzug konfiguriert sein. Der Handgriff-Adapter kann eine Ausnehmung aufweisen, welche mit einer Zugöse der Zugdeichsel korrespondiert.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: eine schematische perspektivische Ansicht eines Routenzuges, in welchem Transportwagen gemäß den beschriebenen Ausführungsbeispielen als Anhänger eingesetzt werden;
- Fig. 2a: eine schematische perspektivische Ansicht eines fahrbaren Transportwagens gemäß einem ersten Ausführungsbeispiel, in einem beladenen Zustand;
- Fig. 2b: eine schematische perspektivische Ansicht eines fahrbaren Transportwagens gemäß einem zweiten Ausführungsbeispiel, in einem unbeladenen Zustand;
- Fig. 3a: eine schematische perspektivische Ansicht des Transportwagens des zweiten Ausführungsbeispiels mit abgenommenem Handgriff-Adapter; und
- Fig. 3b: eine schematische perspektivische Ansicht eines Handgriff-Adapters der Zugdeichsel.

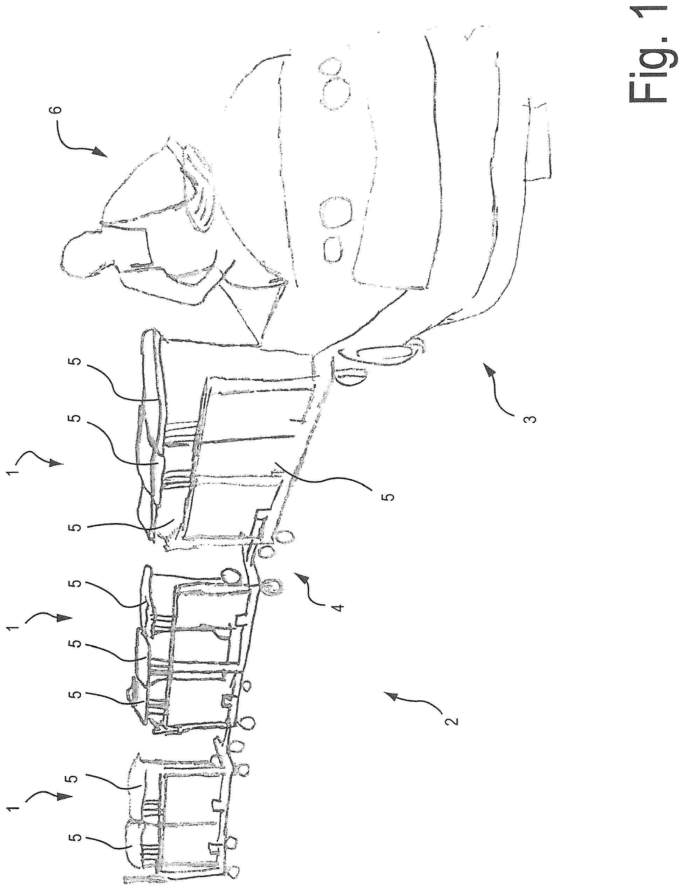

Die Fig. 1 ist eine perspektivische Ansicht eines Routenzuges 2, in welchem die Transportwagen 1 gemäß den beschriebenen Ausführungsbeispielen als Anhänger eingesetzt werden. Der Routenzug 2 wird von einer Zugmaschine 3 gezogen, welche von einer Person 6 gelenkt wird. Mehrere Transportwagen 1, welche nachfolgend als Ausführungsbeispiele genauer beschrieben werden, können zu dem Routenzug zusammengestellt werden. Die Transportwagen 1 gemäß den beschriebenen Ausführungsbeispielen sind zur Aufnahme von einem oder mehreren Typen der zweirädrigen Müllbehälter 5 nach der DIN-EN 840-1 (Ausgabe 2013-3) ausgebildet. Zusätzlich oder alternativ ist es jedoch auch denkbar, dass der Transportwagen 1 zur Aufnahme anderer Behälter konfiguriert ist. Die Transportwagen 1 können insbesondere zur gesonderten Lagerung sowie zum Transport von sortierten Abfallprodukten, bzw. Müll, insbesondere für Gewerbemüll, ölhaltigen Abfall, Papier usw., der in der Industrie anfällt, verwendet werden.

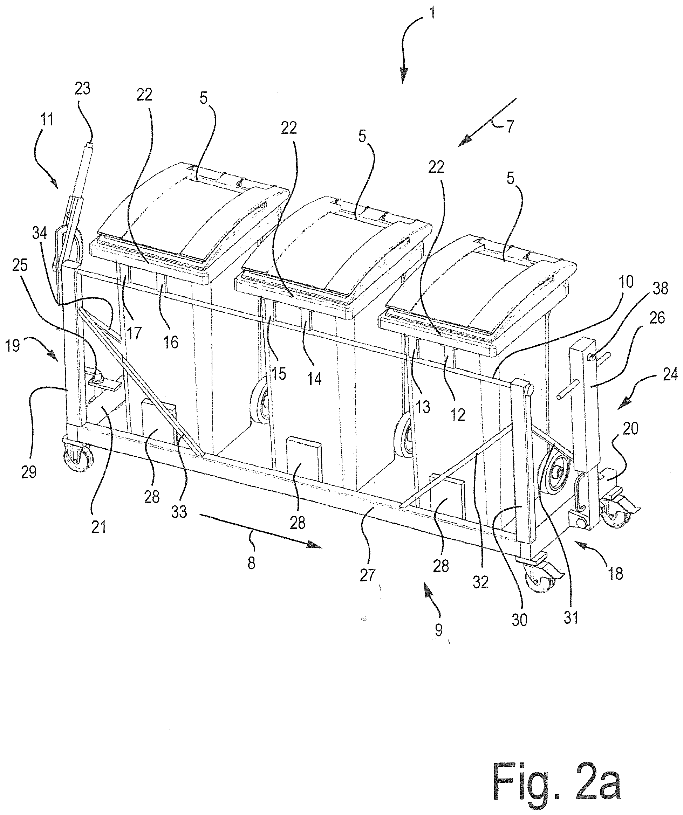

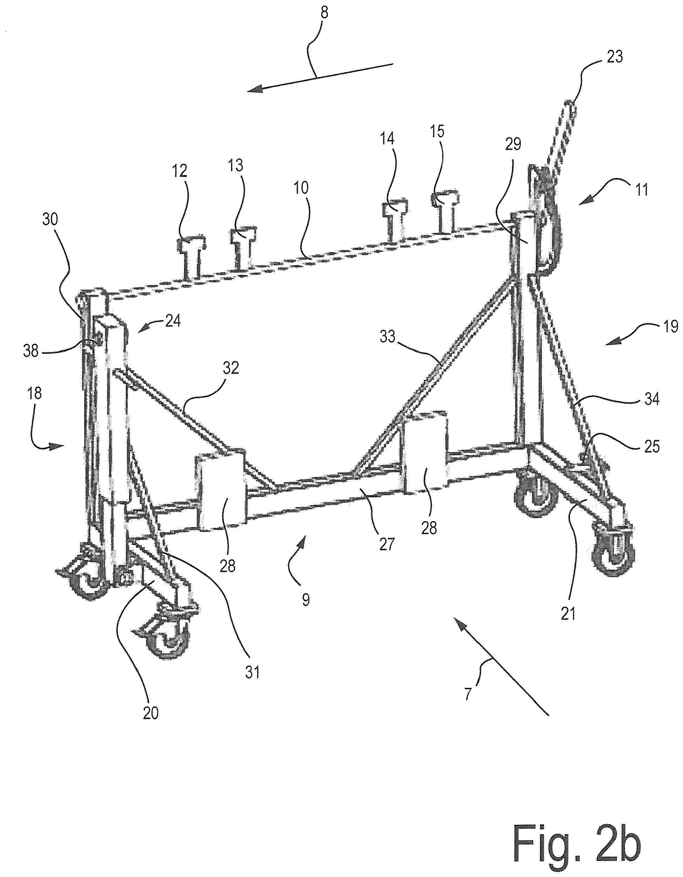

Der Transportwagen 1 gemäß dem ersten Ausführungsbeispiel (gezeigt in der **Fig. 2a**) weist die Aufnahmearme **12 bis 17** zur Aufnahme und zum Transport von drei Müllbehältern auf. Der Transportwagen 1 gemäß dem zweiten Ausführungsbeispiel (gezeigt in der **Fig. 2b**) weist hingegen nur die Aufnahmearme 12 bis 15 zur Aufnahme und zum Transport von zwei Müllbehältern auf. Es ist auch denkbar, dass der Transportwagen nur für einen Müllbehälter oder für mehr als drei Müllbehälter konfiguriert ist.

Jedes Paar an Aufnahmearmen ist jeweils zur Aufnahme eines der Müllbehälter 5 ausgebildet. Es ist jedoch auch denkbar, dass die Aufnahme eines Müllbehälters 5 durch einen einzelnen Aufnahmearm oder durch mehr als zwei Aufnahmearme bewirkt wird.

Jeder der Aufnahmearme 12 bis 17 ist jeweils als Kammaufnahme ausgebildet, welche in Eingriff mit einer Kammleiste **22** des Müllbehälters 5 bringbar ist. Die Kammleiste 22 wird durch einen Bereich eines umgelegten Randes einer Einfüllöffnung des Müllbehälters 5 bereitgestellt. Alle zweirädrigen Müllbehälter gemäß der DIN EN 840-1 (Ausgabe 2013-03) weisen eine solche Kammleiste auf. In den Figuren sind beispielhaft Müllbehälter 5 gezeigt, welche gemäß dieser Norm ausgeführt sind und ein Fassungsvermögen von 240 Litern aufweisen. Die Aufnahmearme 12 bis 17 können jeweils auch konfiguriert sein, Müllbehälter mit unterschiedlichem Fassungsvermögen aufzunehmen.

Jeder der Aufnahmearme 12 bis 17 ist jeweils starr an einer Welle **10** befestigt. Die Welle 10 erstreckt sich parallel zur Zugrichtung **8** des Transportwagens und ist mit einem manuellen Drehantrieb **11** funktionell verbunden. Es ist jedoch auch denkbar, dass zusätzlich oder alternativ ein maschineller Drehantrieb vorgesehen ist. Durch Drehen der Welle 10 können die freien Enden der Aufnahmearme 12 bis 17 zwischen einer unteren Endposition und einer oberen Endposition bewegt werden. In der unteren Endposition können Behälter 5 mit ihrer Kammleiste (Einhängeabschnitt) 22 oberhalb des freien Endes des Aufnahmearms 12 bis 17 positioniert werden, so dass durch Drehen der Welle die Aufnahmearme zunächst in die Kammleisten eingreifen und dann alle eingehängten Behälter 5 angehoben werden, bis sie in der oberen Endposition vom Boden abgehoben sind. Die angehobenen Müllbehälter 5 sind nun im Transportwagen 1 aufgenommen, so dass sie mit Hilfe des Transportwagens 1 gemeinsam transportierbar sind.

Der Transportwagen 1 weist eine Dreharretierung auf, um die Welle 10 in einer Drehposition zu arretieren, in welcher die Aufnahmearme in der zweiten Orientierung sind, welche in der Fig. 2a dargestellt ist. In den gezeigten Ausführungsbeispielen ist die Dreharretierung als Rasthebel ausgebildet. Es sind jedoch auch alternative Ausführungsformen der Dreharretierung denkbar.

Durch die beschriebene Ausgestaltung des Transportwagens 1 ist es möglich, mit Hilfe einer Drehung der Welle 10 die Müllbehälter 5 gleichzeitig aufzunehmen, ohne dass die Müllbehälter auf eine Ladefläche angehoben und dort fixiert werden müssen.

Ferner ermöglicht der Transportwagen 1 auch, die Müllbehälter zu öffnen, wenn diese im Transportwagen 1 aufgenommen sind. Daher ist es beispielsweise möglich, den Transportwagen 1 an einer Stelle abzustellen, an welcher er dann als Sammelplatz für Müll dient. In anderen Worten stellt der Transportwagen 1 gleichzeitig eine Müllstation dar. Sind die Müllbehälter voll, können sie dann durch einen Routenzug abgeholt werden. Dies ermöglicht auch ein leichtes Sauberhalten des Stellplatzes. Für den Transport zum Müllcontainer ist die Müllstation mit mehreren Wagen kuppelbar. Durch das Aufnehmen der Müllbehälter im Transportwagen 1 sind die Müllbehälter kompakt aufgeräumt und jederzeit an einen anderen Stellplatz verstellbar.

Das Entladen der Müllbehälter 5 kann in einer gleichermaßen effizienten Weise erfolgen. Hierzu wird die Dreharretierung gelöst, indem ein Freigabeknopf 23 des Rasthebels betätigt wird. Nach dem Lösen der Dreharretierung wird die Welle 10 so gedreht, dass sich die freien Enden der Aufnahmearme 12 bis 17 zur Beladungsseite hin herabneigen. Die Drehung wird so lange durchgeführt, bis sich die Müllbehälter 5 entweder selbständig aus dem Eingriff mit den Aufnahmearmen 12 bis 17 lösen oder aber bis die Müllbehälter 5 sich leicht aus dem Eingriff lösen lassen.

Die Müllbehälter 5 können dann durch eine Bewegung entgegen der Beladungsrichtung 7 vom Transportwagen 1 entfernt werden. Durch die vorgesehene Welle 10 und den Aufnahmearmen 12 bis 17 ist es daher möglich, alle aufgenommenen Müllbehälter 5 in einem Vorgang effizient zu entladen. Um also die Müllbehälter 5 für das Sammeln von Müll am Sammelplatz abzustellen, ist es nicht erforderlich, die Müllbehälter 5 aus einer Fixierung zu lösen und von einer Ladefläche zu entladen.

Der Transportwagen 1 ist so konfiguriert, dass er in einer Beladungsrichtung quer zur Zugrichtung beladbar ist. In der Fig. 2a ist die Beladungsrichtung schematisch durch den Pfeil 7 angedeutet. Die Zugrichtung ist schematisch durch den Pfeil 8 angedeutet. Dies ermöglicht es, die hier beschriebenen Ausführungsformen für eine andere Anzahl an Müllbehältern anzupassen. Außerdem kann eine Be- und Entladung eines Transportwagens 1 durchgeführt werden, ohne den Transportwagen 1 aus dem Routenzug auszukoppeln.

Wie dies besonders deutlich in der Fig. 2b zu sehen ist, weist der Transportwagen 1 zwei Stützausleger **18**, **19**, auf, die, gesehen entlang einer Längsrichtung der Welle 10, versetzt relativ zueinander angeordnet sind. Die freien Endabschnitte der Stützausleger 18, 19 erstrecken sich auf einer gemeinsamen Seite nach außen, gesehen relativ zu eine vertikalen Ebene, welche durch die Längsachse der Welle 10 verläuft. Diese Seite kann als Beladungsseite bezeichnet werden.

Die Aufnahmearme 12 bis 17 sind, gesehen entlang einer Längsrichtung der Welle 10, zwischen den Stützauslegern 18, 19 angeordnet. Dadurch können die Müllbehälter 5 entlang der Beladungsrichtung 7 nahe genug an die Aufnahmearme 12 bis 17 herangefahren werden, um sie durch eine Drehung der Welle 10 aufzunehmen. Außerdem ist es durch diese Ausgestaltung der Stützausleger 18, 19 möglich, den Schwerpunkt der Transportlast in der Nähe der Mittelachse des Transportwagens 1 zu platzieren. Dies erhöht die Stabilität des Transportwagens 1.

Der Transportwagen 1 weist eine bodenseitige Zarge **9** auf, welche beladungsseitig offen ist und auf einer Höhe tiefer als die Welle 10 angeordnet ist. Beispielsweise kann die Zarge 9 auf halber Höhe der Welle 10 oder noch tiefer angeordnet sein. Die Zarge 9 weist einen Abschnitt **27** auf, welcher sich parallel zur Welle 10 erstreckt. In dem gezeigten Ausführungsbeispiel ist der Abschnitt 27 in Schwerkraftrichtung der Welle 10 angeordnet. Es ist jedoch auch denkbar, dass der Abschnitt 27 in horizontaler Richtung an anderen Positionen angeordnet ist.

Am Abschnitt 27 der Zarge 9 sind Anlageplatten **28** befestigt. Für jede der Anlageplatten 28 korrespondiert eine axiale Position entlang der Längsachse der Welle 10 mit einer axialen Position eines der Paare der Aufnahmearme 12 bis 17. Wie in der Fig. 2a zu sehen ist, dienen die Anlageplatten 28 als Anlagefläche für die Müllbehälter 5, wenn diese im Transportwagen 1 aufgenommen sind.

Jeder der Stützausleger 18, 19 weist eine Basis auf, welche durch einen Abschnitt **20**, **21** der offenen Zarge 9 gebildet ist. Die Abschnitte 20, 21 erstrecken sich quer zur Zugrichtung 8. Der Abschnitt 21 stützt sich über zwei Rollmittel auf dem Boden ab. Die Rollmittel können jeweils als Bockrolle ausgebildet sein, d.h. als Rolle, welche ein festes, nicht schwenkbares Gehäuse aufweist. Der Abschnitt 20 stützt sich ebenfalls über zwei Rollmittel auf dem Boden ab. Diese Rollmittel können jeweils als Lenkrolle ausgebildet sein, d.h. als Rolle, welche um eine vertikale Achse schwenkbar ist. An der Unterseite des Transportwagens sind daher zwei drehbare und zwei starre Transporteinrichtungen angeordnet zum leichteren Transport.

Die Welle 10 ist an zwei axial voneinander separierten Bereichen in jeweils einem Drehlager gelagert. Jedes der Drehlager wird von einem vertikalen Tragarm **29**, **30** gestützt. Jeder der Tragarme 29, 30 ist über Verstrebungen **31 bis 34** mit der Zarge 9 verbunden. Dadurch wird eine einfache Konstruktion bereitgestellt, welche eine genügende Stabilität bereitstellt.

Der Transportwagen 1 weist eine Zugvorrichtung für Routenzüge auf. Die Zugvorrichtung weist eine Zugdeichsel **24** und eine Anhängerkupplung **25** auf.

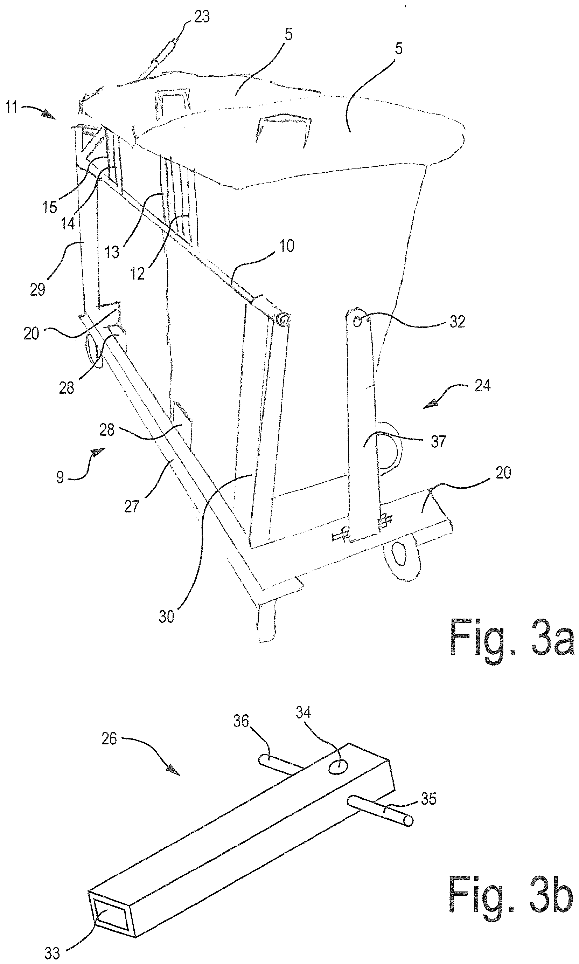

Wie in den **Fign. 3a und 3b** illustriert ist, ist der Transportwagen 1 so ausgebildet, dass bei Bedarf eine aufsteckbare Deichsel angebracht werden kann, um die Vorrichtung von Hand zu transportieren. Insbesondere ist die Zugdeichsel 24 so ausgebildet, dass sie wahlweise als Zugdeichsel für Routenzüge und als Handdeichsel konfigurierbar ist.

Die Fig. 3a zeigt die erste Konfiguration der Zugdeichsel 24, in welcher der Transportwagen 1 an einen Routenzug, wie in der Fig. 1 dargestellt, koppelbar ist. Um die Zugdeichsel 24 für den Handbetrieb zu konfigurieren, weist die Zugdeichsel einen Handgriff-Adapter **26** (gezeigt in der Fig. 3b) auf. Der Handgriff-Adapter 26 weist eine Ausnehmung **33** zur Aufnahme eines Deichselstiels **37** der Zugdeichsel 24 auf. Ferner weist der Handgriff-Adapter 26 eine Öffnung **34** auf, welche mit einer Zugöse **32** des Deichselstiels 37 korrespondiert. Ist der Deichselstiel 37 in der vorgesehenen Position innerhalb der Ausnehmung 33 aufgenommen, kann durch die Öffnung 34 des Handgriff-Adapters 26 und durch die Zugöse 32 des Deichselstiels 37 ein Arretierungsbolzen **38** (Fign. 2a, 2b) eingeführt werden, um den Handgriff-Adapter 26 relativ zum Deichselstiel 37 zu befestigen. Mit Hilfe der Handgriffe **35**, **36** des Handgriff-Adapters 26 (gezeigt in der Fig. 3b) kann dann der Transportwagen 1 manuell gezogen werden.

Damit wird ein flexibler Transportwagen 1 bereitgestellt, welcher den Einsatz des Transportwagens 1 sowohl innerhalb eines Routenzuges, als auch im manuellen Betrieb ermöglicht.

## Patentansprüche

1. Fahrbarer Transportwagen (1) zur Aufnahme und zum Transport mindestens eines Behälters (5), insbesondere eines Müllbehälters,
mit einer rechtwinklig zur Fahrtrichtung des Transportwagens (1) offenen Behälteraufnahme (9) zur Aufnahme des mindestens einen Behälters (5), mit einer drehbar gelagerten, horizontalen Welle (10), die sich im Wesentlichen in Fahrtrichtung erstreckt und mindestens einen abstehenden Aufnahmearm (12-17) zum Einhängen eines Behälters (5) aufweist, und
mit einem manuellen oder motorbetriebenen Drehantrieb (11) zum Verdrehen der Welle (11), um den mindestens einen Aufnahmearm (12-17) zwischen einer unteren Endposition, in der ein in der Behälteraufnahme (9) befindlicher Behälter (5) mit einem Einhängeabschnitt (22) oberhalb des freien Endes des Aufnahmearms (12-17) positionierbar oder in Eingriff mit dem freien Ende des Aufnahmearms (12-17) bringbar ist, und einer oberen Endposition, in der der Behälter (5) am Einhängeabschnitt (22) eingehängt und vom Boden abgehoben ist, zu bewegen.

2. Transportwagen nach Anspruch 1, **dadurch gekennzeichnet, dass** die Welle (10) mehrere abstehende Aufnahmearme (12-17) zum Einhängen mehrerer Behälter (5) aufweist.

3. Transportwagen nach Anspruch 1 oder 2, **dadurch gekennzeichnet, dass** der mindestens eine Aufnahmearm (12-17) als Kammaufnahme ausgebildet ist.

4. Transportwagen nach einem der vorhergehenden Ansprüche, **dadurch gekennzeichnet, dass** die Behälteraufnahme durch eine insbesondere U-förmige Zarge (9) gebildet ist, welche auf einer Höhe unterhalb der Welle (10) angeordnet ist, wobei zumindest ein Abschnitt (27) der Zarge sich im Wesentlichen parallel zur Welle (10) erstreckt.

5. Transportwagen nach einem der vorhergehenden Ansprüche, **gekennzeichnet durch** eine Dreharretierung zur Arretierung der Welle (10) in zumindest einer der beiden Endpositionen des mindestens einen Aufnahmearms (12-17).

6. Transportwagen nach Anspruch 5, **dadurch gekennzeichnet, dass** die Dreharretierung durch einen Rasthebel gebildet ist.

7. Transportwagen nach einem der vorhergehenden Ansprüche, **gekennzeichnet durch** zwei Stützausleger (18, 19), welche, gesehen entlang einer Längsachse der Welle (10), relativ zueinander versetzt angeordnet sind und welche jeweils einen freien Endabschnitt aufweisen, über welchen sich der Transportwagen (1) am Boden abstützt, wobei relativ zu einer Vertikalebene, in welcher sich die Längsachse der Welle (10) befindet, die freien Endabschnitte sich auf einer gemeinsamen Seite nach außen erstrecken, und wobei der mindestens eine Aufnahmearm (12-17), gesehen entlang der Längsachse der Welle (10), zwischen den Stützauslegern (18, 19) angeordnet ist.

8. Transportwagen nach Anspruch 7, **dadurch gekennzeichnet, dass** einer oder beide der Stützausleger (18, 19) sich im Wesentlichen rechtwinklig zur Längsachse der Welle (10) erstrecken.

9. Transportwagen nach Anspruch 7 oder 8, **dadurch gekennzeichnet, dass** sich die Endabschnitte der Stützausleger (18, 19) jeweils über ein Rollmittel auf dem Boden abstützen.

10. Transportwagen nach einem der vorhergehenden Ansprüche, **gekennzeichnet durch** eine Zugdeichsel (24), welche insbesondere an einem der Stützausleger (18, 19) angelenkt ist.

11. Transportwagen nach Anspruch 10, **dadurch gekennzeichnet, dass** die Zugdeichsel (24) einen Handgriff-Adapter (26) aufweist.

12. Transportwagen nach einem der vorhergehenden Ansprüche, **dadurch gekennzeichnet, dass** der Transportwagen (1) eine Anhängerkupplung (25) aufweist, welche insbesondere an einem der Stützausleger (18, 19) befestigt ist.

13. Transportwagen nach einem der vorhergehenden Ansprüche, **dadurch gekennzeichnet, dass** der Transportwagen (1) als Anhänger konfiguriert ist, wobei eine Zugrichtung (8) des Anhängers im Wesentlichen parallel zur Längsachse der Welle (10) verläuft.
